# EUROPÄISCHE PATENTSCHRIFT

(11) **EP 1 546 654 B1**
(45) Veröffentlichungstag und Bekanntmachung des Hinweises auf die Patenterteilung: **01.03.2006**
(21) Anmeldenummer: 03788905.2
(22) Anmeldetag: 17.09.2003
(51) Int. Cl.: G01C 19/72

(54) **VERFAHREN ZUR REGELUNG DER ARBEITSFREQUENZ UND MULTIFUNKTIONALER INTEGRIERT-OPTISCHER CHIP EINES FASEROPTISCHEN GYROSKOPS**
METHOD FOR REGULATING THE OPERATING FREQUENCY OF THE OPTICAL MULTIFUNCTIONAL INTEGRATED CIRCUIT CHIP FOR A FIBRE-OPTIC GYROSCOPE
PROCEDE DE REGULATION DE LA FREQUENCE DE TRAVAIL ET DE LA PUCE INTEGREE OPTIQUE MULTIFONCTIONNELLE D'UN GYROSCOPE A FIBRES OPTIQUES

(30) Priorität: 30.09.2002 DE 10245540
(43) Veröffentlichungstag der Anmeldung: 29.06.2005
(73) Patentinhaber: LITEF GmbH, 79115 Freiburg (DE)
(72) Erfinder: VOIGT, Sven, 79111 Freiburg (DE); SPAHLINGER, Günter, 70188 Stuttgart (DE)
(74) Vertreter: Müller, Frithjof E.
(86) Internationale Anmeldenummer: PCT/EP2003/010328
(87) Internationale Veröffentlichungsnummer: WO 2004/038329

(56) Entgegenhaltungen:
- DE-A- 10 130 159
- DE-C1- 19 753 427
- US-A- 5 469 257
- US-A- 6 014 217

## Beschreibung

Die Erfindung betrifft ein Verfahren zur Regelung der Arbeitsfrequenz eines faseroptischen Gyroskops (FOG) mit geschlossener Regelschleife, bei welchem das demodulierte Ausgangssignal des FOG-Detektors als Ist-Signal einerseits den Eingang eines FOG-Hauptreglers und andererseits über ein Austastfilter einen den Systemtakt des FOG bestimmenden VCO beaufschlagt, wobei das Ausgangssignal des Hauptreglers als Modulationssignal einem in einem multifunktionalen optischen Chip (MIOC) ausgebildeten digitalen Phasenmodulator zugeführt wird, und wobei zur Bestimmung und Regelung der exakten Arbeitsfrequenz des FOG dem demodulierten, zum Austastfilter gelangenden Detektorausgangssignal ein periodisches Zusatzmodulationssignal überlagert wird. Die Erfindung bezieht sich außerdem auf einen multifunktionalen integriert-optischen Chip (MIOC) für ein faseroptisches Gyroskop (FOG).

In DE 197 53 427 C1 ist ein digitaler Phasenmodulator, insbesondere für faseroptische Drehratensensoren mit geschlossener Regelschleife, beschrieben, bei dem zur Erhöhung der Auflösung ein niedersignifikanter Anteil eines von einem FOG-Hauptregler gelieferten binären Ansteuersignals über einen Digital/Analog-Wandler relativ niedriger Auflösung in ein Analogsignal gewandelt wird, das einer auf dem den digitalen Phasenmodulator enthaltenden integriert-optischen Chip separat vorgesehenen weiteren Elektrode zugeführt wird. Damit lässt sich die Auflösung von beispielsweise 8 auf ca. 10 Bit erhöhen. Die separate Elektrode oder gegebenenfalls ein separates Elektrodenpaar ist dem digitalen Phasenmodulator unmittelbar zugeordnet

In der nicht vorveröffentlichten DE-Patentanmeldung 101 30 159.6 wird ein Verfahren zur Vermeidung von Bias-Fehlern aufgrund synchroner Einstreuung bei faseroptischen Gyroskopen mit geschlossener Regelschleife vorgeschlagen, bei dem vorgesehen ist, dem demodulierten Ausgangssignal des FOG-Detektors ein im Abtasttakt des FOG periodisches Signal in Form einer Zusatzmodulation am digitalen Phasenmodulator innerhalb eines multifunktionalen integrierten optischen Chips zu überlagern. Die im demodulierten Detektorsignal vorhandenen Reste dieser Zusatzmodulation werden detektiert und einem Hilfsregelkreis zugeführt, welcher die Arbeitsfrequenz so nachregelt, dass die Zusatzmodulation möglichst zu Null wird.

Die Implementierung dieses bekannten Verfahrens, die zu einer erheblichen Erhöhung der Genauigkeit bei FOGs führt, hat jedoch in der Praxis durch die Verwendung eines gemischten Ansteuersignals am Phasenmodulator des MIOCs zu praktischen Schwierigkeiten, insbesondere zu einem gewissen Zielkonflikt, geführt, wenn gleichzeitig versucht wird, die Auflösung des digitalen Phasenmodulators ohne Vergrößerung der Baulänge des MIOCs anders zu lösen als in der oben genannten DE-Patentschrift beschrieben. Dies gilt insbesondere dann, wenn der Phasenmodulator zur Erhöhung der Auflösung mit nicht-binären Ansteuersignalen betrieben werden soll.

Der Erfindung liegt damit die Aufgabe zugrunde, das Verfahren zur Regelung der Arbeitsfrequenz eines FOG zu vereinfachen.

Diese Aufgabe wird bei einem Verfahren der eingangs genannten Gattung gemäß der Erfindung dadurch gelöst, dass ein periodisches Zusatzsignal zur Frequenzbestimmung bzw. Frequenzregelung des FOG als Analogsignal separaten im MIOC ausgebildeten Phasenkorrektur-Elektroden zugeführt wird.

Ein multifunktionaler integriert-optischer Chip (MIOC) für ein faseroptisches Gyroskop, in dem als mindestens eine Funktionsgruppe ein durch parallel zu einer Lichtführungsstrecke angeordnete Elektroden realisierter Phasenmodulator implementiert ist, eignet sich zur Realisierung des erfindungsgemäßen Verfahrens dadurch, dass gemäß der Erfindung zusätzlich zum Phasenmodulator ein parallel zur Lichtführungsstrecke angeordnetes Elektrodenpaar vorhanden ist zur Beaufschlagung eines Lichtstrahls auf der Lichtführungsstrecke mit einem periodischen Zusatzmodulationssignal zur Regelung der Arbeitsfrequenz des Gyroskops.

Eine optimierte Baugröße des integriert-optischen Chips lässt sich dann erzielen, wenn das zusätzliche Elektrodenpaar zwischen dem digitalen Phasenmodulator und einem Strahlteiler innerhalb des Chip angeordnet ist.

Die Erfindung und vorteilhafte Einzelheiten werden nachfolgend unter Bezug auf die Zeichnungen in beispielsweiser Ausführungsform näher erläutert. Es zeigen:
- **Fig. 1**: ein schematisiertes Blockschaltbild der Architektur eines FOGs mit Darstellung der erfindungsgemäßen Arbeitsfrequenzregelung; und
- **Fig. 2**: in etwas vereinfachter Darstellung die Draufsicht auf einen multifunktionalen integriert-optischen Chip (MIOC) mit zusätzlichen Elektroden zur vorteilhaften Realisierung des erfindungsgemäßen Regelverfahrens.

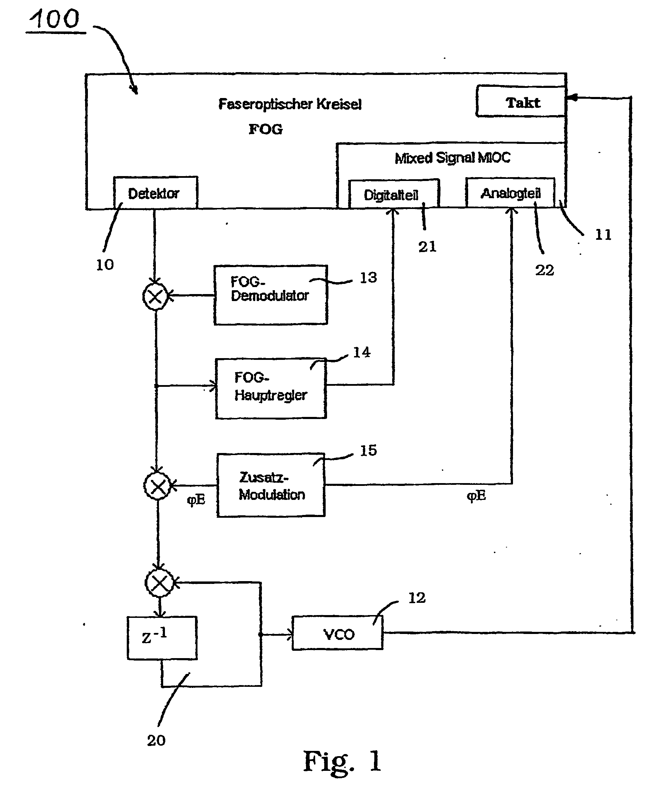

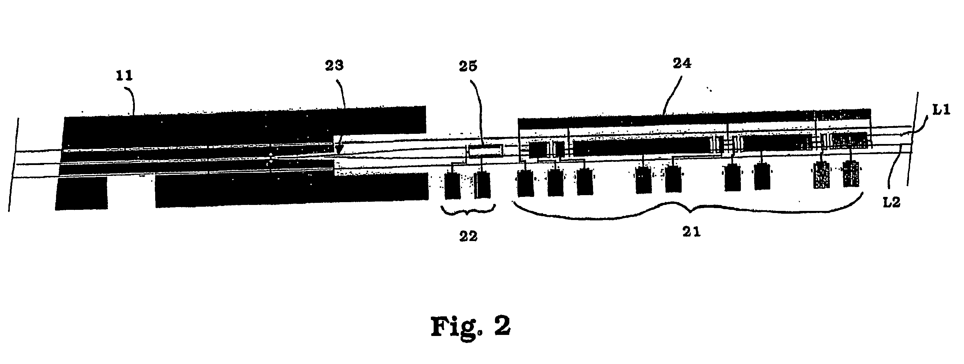

Die optische Architektur eines faseroptischen Kreisels wird als grundsätzlich bekannt vorausgesetzt; sie ist daher in Fig. 1 nur als Block 100 dargestellt Das vom Detektor 10 des FOG 100 gelieferte Messsignal, das die Drehrateninformation enthält, wird durch einen FOG-Demodulator 13 demoduliert und beaufschlagt, da es sich um einen faseroptischen Kreisel mit geschlossener Regelschleife handelt, den Eingang eines FOG-Hauptreglers 14, der unter anderem ausgangsseitig ein vorzugsweise nicht-binäres U_{π}- bzw. Rückstellsignal an einen in einem multifunktonalen integriert-optischen Chip, d. h. einem MIOC 11, ausgebildeten digitalen Phasenmodulator 24 liefert, der in spiegelsymmetrischer Ausführung in grundsätzlich bekannter Weise die nach einer Strahlteilung 23 entstandenen und gegenläufig eine (nicht gezeigte) Messspule durchsetzende Lichtstrahlen auf zwei Lichtführungsstrecken L1, L2 beeinflusst (vgl. Fig. 2). Außer dem FOG-Demodulator 13 und dem FOG-Hauptregler 14 ist eine Zusatzmodulationseinrichtung 15 vorhanden, deren periodisches Signal ϕE einerseits dem Modulationssignal vom FOG-Hauptregler überlagert wird und dann über ein Austastfilter 20 einen spannungssteuerbaren Oszillator VCO 12 steuert, der den Arbeitstakt des FOG-Kreiselsystems bestimmt. Erfindungsgemäß gelangt das Zusatzmodulationssignal ϕE auf einen im MIOC 11 ausgebildeten Analogteil, der - wie die Fig. 2 zeigt - durch ein zusätzliches vom digitalen Phasenmodulator unabhängiges Elektrodenpaar 25 realisiert ist. Auf die zusätzliche Elektrode, bzw. im dargestellten Beispiel der Fig. 2 das Elektrodenpaar 25, wird also das im Abtasttakt periodische Zusatzmodulationssignal ϕE mit kleiner Amplitude gegeben und erzeugt typischerweise - jedoch in keiner Weise einschränkend - eine maximale Phasenverschiebung von π/32. Diese Phasenverschiebung ist ausreichend, um nach der Demodulation ein Signal zu erzeugen, welches über das Austastfilter 20 den VCO 12 so steuert, dass die gewünschte Arbeitsfrequenz des FOG-Systems exakt eingehalten wird. Abweichend von der in der nicht vorveröffentlichten DE-Patentanmeldung 101 30 159.6 beschriebenen Lösung wird das periodische Zusatzmodulationssignal ϕE zur Bestimmung der Kreiselfrequenz nicht dem digitalen MIOC-Modulationssignal hinzuaddiert, sondern wird direkt auf die zusätzliche Analogelektrode bzw. das Elektrodenpaar 25, also auf den Analogteil 22 des MIOCs 11 gegeben.

Der besondere Vorteil der Erfindung ist, dass das Zusatzmodulationssignal ϕE nicht digital umgesetzt werden muss, und eine Addition von Modulationssignal und Zusatzmodulation entfällt.

## Patentansprüche

1. Verfahren zur Regelung der Arbeitsfrequenz eines faseroptischen Gyroskops FOG mit geschlossener Regelschleife, bei welchem das demodulierte Ausgangssignal des FOG-Detektors als Ist-Signal einerseits den Eingang eines FOG-Hauptreglers und andererseits über ein Austastfilter einen den Systemtakt des FOG bestimmenden VCO beaufschlagt, wobei das Ausgangssignal des Hauptreglers als Modulationssignal einem in einem multifunktionalen integriert-optischen Chip MIOC (11) ausgebildeten digitalen Phasenmodulator (21) zugeführt wird, und wobei zur Bestimmung und Regelung der exakten Arbeitsfrequenz des FOG dem demodulierten, zum Austastfilter gelangenden Detektorausgangssignal ein periodisches Zusatzmodulationssignal überlagert wird, **dadurch gekennzeichnet, dass** das Zusatzmodulationssignal (φE), als Analogsignal separaten im MIOC ausgebildeten Phasen-Korrekturelektroden (25) zugeführt wird.

2. Multifunktionaler integriert-optischer Chip MIOC (11) für ein faseroptisches Gyroskop FOG (100), in dem als mindestens eine Funktionsgruppe ein durch parallel zu einer Lichtführungsstrecke angeordnete Elektroden realisierter Phasenmodulator (21) implementiert ist, **dadurch gekennzeichnet, dass** zusätzlich zum Phasenmodulator ein parallel zur Lichtführungsstrecke angeordnetes Elektrodenpaar (25) vorhanden ist zur Beaufschlagung eines Lichtstrahls auf der Lichtführungsstrecke mit einem periodischen Zusatzmodulationssignal (φE) zur Regelung der Arbeitsfrequenz des Gyroskops.

3. Integriert-optischer Chip nach Anspruch 2, **dadurch gekennzeichnet, dass** das zusätzliche Elektrodenpaar zwischen dem Phasenmodulator und einem Strahlteiler (23) angeordnet ist.

## Claims

1. A method for regulating the operating frequency of a fiber-optic gyroscope FOG with a closed control loop, in which the demodulated output signal of the FOG detector, as actual signal, is applied on the one hand to the input of a FOG main controller and on the other hand, via a gating filter, to a VCO that determines the system clock of the FOG, the output signal of the main controller, as modulation signal, being fed to a digital phase modulator (21) formed in a multifunctional integrated optical chip MIOC, and, for the purpose of determining and regulating the exact operating frequency of the FOG, a periodic additional modulation signal is superposed on the demodulated detector output signal passing to the gating filter, **characterized in that** the additional modulation signal (ϕE), as analog signal, is fed to separate phase correction electrodes (25) formed in the MIOC.

2. A multifunctional integrated optical chip MIOC 11 for a fiber-optic gyroscope FOG (100), in which a phase modulator (21) realized by electrodes arranged parallel to a light guiding path is implemented as at least one functional group, **characterized in that**, in addition to the phase modulator, an electrode pair (25) arranged parallel to the light guiding path is present for applying a periodic additional modulation signal (ϕE) to a light beam on the light guiding path for the purpose of regulating the operation frequency of the gyroscope.

3. The integrated optical chip as claimed in claim 2, **characterized in that** the additional electrode pair is arranged between the phase modulator and a beam splitter (23).

## Revendications

1. Procédé de régulation de la fréquence effective d'un gyroscope à fibres optiques FOG avec boucle de régulation fermée, au cours duquel le signal de sortie démodulé du détecteur FOG est appliqué sous la forme d'un signal réel, d'une part à l'entrée d'un régulateur principal FOG et d'autre part par l'intermédiaire d'un filtre de suppression à un VCO déterminant la cadence du système FOG, le signal de sortie du régulateur principal étant amené sous la forme d'un signal de modulation à un modulateur de phase numérique (21) conçu dans une puce optique intégrée multifonctionnelle MIOC (11) et pour la détermination et la régulation de la fréquence effective réelle du FOG, un signal de modulation supplémentaire périodique étant superposé au signal de sortie démodulé du détecteur arrivant au filtre de suppression, **caractérisé en ce que** le signal de modulation supplémentaire (φE) est amené sous la forme d'un signal analogique à des électrodes de correction de phase séparées (25), conçues dans le MIOC.

2. Puce optique intégrée multifonctionnelle MIOC (11) pour un gyroscope à fibres optiques FOG (100), dans lequel est implémenté un modulateur de phase (21) réalisé par des électrodes disposées à la parallèle d'un trajet de conduction des faisceaux lumineux, **caractérisé en ce qu'**en supplément du modulateur de phase, il existe une paire d'électrodes (25) disposée à la parallèle du trajet de conduction des faisceaux lumineux pour l'application d'un faisceau lumineux sur le trajet de conduction des faisceaux lumineux avec un signal périodique de modulation de phase supplémentaire (φE) pour la régulation de la fréquence effective du gyroscope.

3. Puce optique intégrée selon la revendication 2, **caractérisée en ce que** la paire d'électrodes supplémentaire est disposée entre le modulateur de phase et un séparateur de faisceaux (23).
